# EUROPEAN PATENT APPLICATION

(11) **EP 0 886 353 A2**
(43) Date of publication of application: **23.12.1998**
(21) Application number: 98115187.1
(22) Date of filing: 20.08.1991
(51) Int. Cl.: H02B 1/052

(54) **Improvements relating to circuit breakers and supply assemblies therefor**

(30) Priority: 21.08.1990 GB 9018346
(62) Divisional of application: 97104775.8
(71) Applicant: Crabtree Electrical Industries Limited, Brownhills, West Midlands WS8 6JZ (GB)
(72) Inventor: Bowen, Peter William, Sutton Coldfield, West Midlands B75 6BP (GB); Shotter, Darren John, Cannock, Staffordshire WS12 5UY (GB)
(74) Representative: Lally, William

(57) **Abstract**

A circuit breaker comprises a housing (2) having generally flat parallel side faces provided on an underside (3) thereof with a mounting recess (4), for mounting on a conventional mounting rail (6). Extending alongside and adjacent to the mounting rail is a supply assembly (28) comprising an elongate housing (30, 36), an elongate supply member (32) located in the housing, and a plurality of slots (38) in the housing. The circuit breaker for use with the supply assembly comprises an edge face (10) provided with an aperture (11), which together with a connecting screw (12) provides a conventional means by which the circuit breaker may be secured to a conventional bus-bar. In accordance with this invention the circuit breaker is provided with a contact assembly (16) comprising a generally L-shaped contact member (18) over the majority of the length of which is provided an insulating sheath (20), leaving a residual uninsulated terminal portion (22) and a contact portion (24). The contact member (16) extends downwardly from the circuit breaker adjacent to the side edge face thereof, with the contact portion (24) being located in the recess (12) and secured therein by screw means (12), and the terminal portion (24) projecting beyond the underside (3) of the contact breaker.

The mounting assembly and supply assembly are secured together in fixed relationship by a mounting assembly (50), such that in consequence of the mounting of the circuit breaker on the mounting rail (6), the terminal portion (22) of the circuit breaker passes through one of the slots (38) of the supply assembly, and into conductive contact with the supply member (32).

## Description

This invention is concerned with improvements relating to the mounting of circuit breakers.

A conventional circuit breaker, hereinafter referred to as being of the kind specified, comprises a generally flat, parallel-sided body provided on the underside thereof with a mounting recess which in use is positioned over and engaged with a mounting rail, with a primary plane of the circuit breaker, extending parallel to the flat sides, extending at right angles to the length of the mounting rail.

A conventionally used mounting rail is termed a "din-rail", being of inverted top hat cross-section, comprising parallel upwardly-facing flanges and narrow outwardly-turned lips of inverted L-shape.

Conventionally the circuit breaker is provided on the underside thereof with an inwardly-turned lip, providing a fixed retaining formation having a re-entrant surface, an opposite side edge portion of the recess being bounded by a straight edge. The circuit breaker comprises a catch assembly, resiliently urged from a retracted position to an advanced position, in which advanced position a retaining element of the catch assembly projects through said straight edge a short distance into the recess.

In use, the circuit breaker is engaged with the mounting rail, the retaining formation being engaged beneath one of the lips with the underside of the circuit breaker inclined relative to the mounting rail, and the circuit breaker moved angularly so as to cause the retaining element to engage the other lip, the profile of the retaining element causing it to be momentarily depressed against the resilient force urging it to its advanced position, as it passes behind the other lip. The circuit breaker is then clamped in conventional manner to a bus-bar, supported in parallel relationship to the mounting rail, with the primary plane of the circuit breaker extending at right angles to the length of the mounting rail, with the flat faces of the circuit breaker lying adjacent to the flat faces of adjacent circuit breakers.

When it is required to move one circuit breaker from an array of circuit breakers on the rail, the retaining element is manually retracted, and held retracted, and the circuit breaker is tilted within said primary plane to permit rectilinear movement of the circuit breaker relative to the rail to disengage the fixed retaining formation from the rail. This necessitates a temporary removal of the bus-bar, and this is inconvenient since it involves disruption of the connections of other circuit breakers and/or of other electrical equipment used in relation to the bus-bar.

Numerous suggestions have been made for the provision of a more convenient mounting of circuit breakers of the kind specified to the mounting rail, to enable them to be removed and replaced with minimal disruption. However heretofore all other suggestions have been unsatisfactory in one aspect or other, and/or unduly expensive.

According to this invention there is provided, in combination, a supply assembly for the use in the supply of electricity to a plurality of circuit breakers, a circuit breaker for use with the supply assembly, and a mounting means upon which the circuit breaker may be mounted,
the supply assembly comprising:
(a) an elongate housing,
(b) an elongate supply member located in the housing,
(c) a plurality of slots in the housing,
the circuit breaker comprising a flat, generally parallel sided body, provided on an underside thereof with a mounting recess co-operable with the mounting means, and a contact member extending adjacent to an edge face of the circuit breaker and projecting beyond the plane of the underside, whereby in consequence of the mounting of the circuit breaker onto the mounting means, part of the contact member passes through one of the slots in the housing and into conductive engagement with the supply member.

Electrical components other than circuit breakers, including main switches, transformers, RCDs, which need the supply of electric current from the supply member, may of course be mounted on the mounting rail in the same manner as the circuit breakers, being connected to the supply member in a similar manner.

The mounting rail may be of the conventional inverted "top hat" section, which may be secured to a conventional supporting assembly, or may be of other convenient shape. Thus the surface provided for engagement and support of the circuit breaker may be provided by spaced, parallel extending surfaces.

Preferably the supply member extends along side the mounting rail at a position such as to enable other electrical components, which do not need to be connected to the supply member, to be mounted on the mounting rail in the same manner as the circuit breakers, without any interference from the supply member.

In this manner the circuit breaker may derive a significant degree of stability substantially wholly from engagement with the flat surface of the mounting rail and engagement with the bus-bar.

Thus the circuit breaker need not be provided with the conventional spring clip engageable with the underside of the mounting rail, and the disadvantages thereof may be obviated.

The circuit breaker may be removed by rectilinear movement in a direction at right angles to the plane of the surface of the mounting rail away therefrom, simultaneously withdrawing the contact member from its engagement with the bus-bar.

However if desired the circuit breaker may comprise a conventional formation, to engage beneath the mounting rail, to provide for greater stability of the circuit breaker on the mounting rail. Such a formation may be provided on the side of the circuit breaker opposite to that on which the contact member is provided, enabling the circuit breaker to be disengaged by initial rotational movement of the circuit breaker to withdraw the contact member from engagement with the bus-bar, followed by translational movement. It will be appreciated that such movement may be effected without disturbance to adjacent components which may be mounted on the rail, and without disturbance to the bus-bar itself.

Alternatively or in addition the circuit breaker comprises a formation on the same side thereof as the contact member, which is spring urged to engage-beneath the mounting rail, such formation conveniently retracting automatically on movement of the circuit breaker against the mounting rail, allowing the circuit breaker to be "clicked" in position.

Preferably the contact member extends beyond said plane of the mounting recess, for engagement with the supply member. Preferably the contact member comprises a flat contact surface lying in a plane which extends at right angles to the primary plane of the circuit breaker, and which may thus engage face-to-face with the bus-bar.

Preferably the contact member is a separate member, conveniently L-shaped, separately mounted on the circuit breaker and located in an aperture of the circuit breaker conventionally provided for direct engagement with a bus-bar, said separate member being connected to the circuit breaker by the screw means provided for electrically connecting the circuit breaker to the bus-bar.

The contact member may be substantially enclosed by an insulating sheath, comprising an exposed, terminal portion for conductive engagement with the bus-bar, and conveniently with an exposed engagement portion for connection with contact means of the circuit breaker itself.

The slots may be provided at spaced intervals in the housing for reception of the contact members of a plurality of such circuit breakers or other electrical equipment.

Preferably the housing comprises a plurality of spring clips at spaced locations such that at least one spring clip is available to engage the contact member as it is moved towards the bus-bar. Where spaced apertures are provided for reception of the contact members, conveniently a spring clip is located in relation to each such aperture.

Preferably each spring clip is provided with an entrant portion which is open for reception of the contact member between said entrant portion and the bus-bar, to enable the spring clip to be opened in consequence of the insertion of the contact member into position.

Preferably the combination set out above also comprises a supporting assembly comprising two end housings each comprising an engagement surface, against which the underside of a mounting rail may be engaged, and spaced arms extending from said engagement surface, at least one of said arms comprising location means to enable one of the outwardly-turned lips of the mounting rail to be engaged therein, and at least one of the arms being resilient to allow the mounting rail to be snap-fitted into position against said engagement surface and between said arms.

In this manner, by mounting a mounting rail on two such housings, one at each of the end regions of the mounting rail, a free-standing assembly may be provided, comprising a mounting rail upon which, between the end housings, circuit breakers may be mounted.

Preferably the engagement surfaces of the housings are provided with formations (such as male and/or female formations) which may be engaged with complementary formations on the underside of the mounting rail, to provide stability.

Preferably the housings are provided with means for supporting the supply assembly in parallel relationship with the mounting rail. Preferably the elongate housing is provided with supporting members to support the ends of the bus-bar, the end housings being co-operable with the supporting members whereby the bus-bar may be secured stably to, extend between, the end housing.

Preferably such co-operation is effected by the provision of snap-fitting means of the end housings, into which parts of the supporting members may be secured, although this may if desired be reversed.

Preferably the combination set out in the last preceding paragraph comprises a supply switch, which may be mounted on the mounting rail in the same manner as has been described in relation to the circuit breakers, and which comprises a contact member for engagement with the bus-bar, the supply switch being adapted to supply electric current to the bus-bar.

According to this invention there is also provided a circuit breaker comprising a conventional, flat, generally parallel-sided body provided on an underside thereof with a mounting recess co-operable with a conventional mounting means, and which is provided in a side edge face thereof with an edge face recess capable of receiving part of a conventional bus-bar, and screw means capable of clamping the circuit breaker to such a conventional bus-bar,
characterised in that the circuit breaker is provided with a contact member comprising
(i) a contact portion which is adapted to be located in said edge face recess, and which may be secured therein by the screw means;
(ii) a central portion extending adjacent to the side edge face of the body;
(iii) a terminal portion which projects beyond the underside of the body; and
(iv) insulating means for said central portion.

According to this invention there is also provided a contact member for use with a circuit breaker of the type having a conventional, flat, generally parallel-sided body which is provided in a side edge face thereof with an edge face recess capable of receiving part of a conventional bus-bar and clamping said bus-bar with screw means, the contact member comprising:
(i) a contact part which is adapted to be located in said edge face recess, and which may be secured therein by the screw means;
(ii) a central portion, which when said contact portion is located in said edge face recess, extends adjacent to the side edge face of the body;
(iii) a terminal portion which when said contact portion is located in said edge face recess, projects beyond the plane of the underside of the body, and
(iv) insulating means for said central portion.

There will now be given a detailed description, to be read with reference to the accompanying drawings, of a preferred embodiment of this invention, which has been selected for the purposes of illustrating the invention by way of example.

In the accompanying drawings:

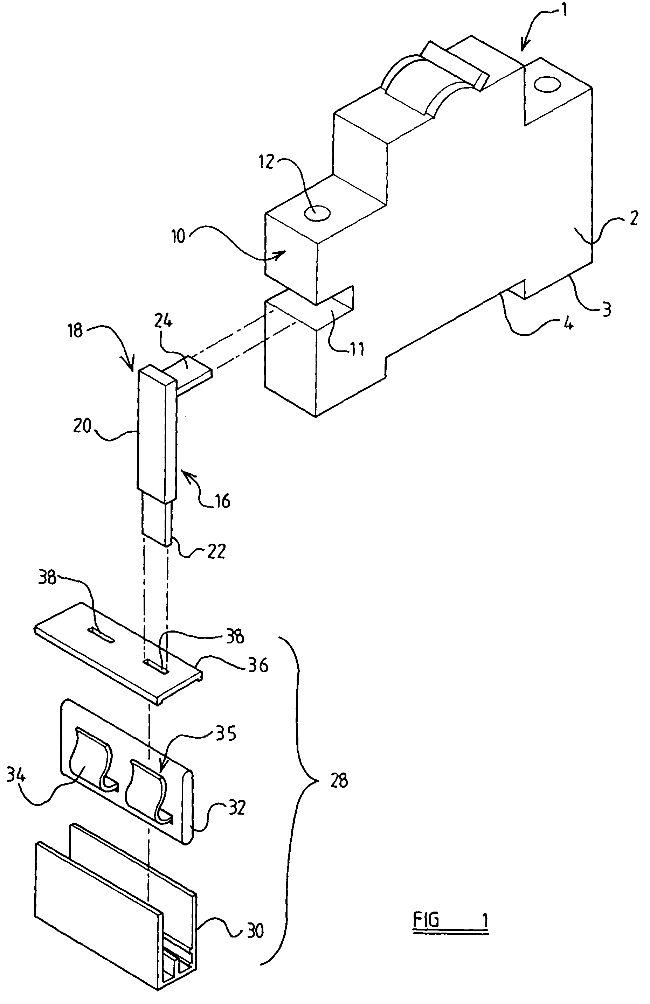

FIGURE 1 is an exploded view of an assembly of circuit breaker, and supply assembly in accordance with the preferred embodiment of the invention;
FIGURE 2 is a schematic sectional view showing the circuit breaker mounted on a mounting rail, and connected with the supply assembly;
FIGURE 3 is a perspective view of a supporting assembly of the second embodiment;
FIGURES 4a and 4b are end elevations of said supporting assembly, illustrating a movement into operative positions thereon of a mounting rail;
FIGURE 5 is an exploded perspective view of the supply assembly; and
FIGURE 6 is a schematic view showing the mounting of the circuit breaker on the mounting rail, and engaging with the supply assembly.

The circuit breaker of the preferred embodiment, indicated by the numeral 1, is generally conventional, comprising a housing 2 having generally flat, parallel side faces and provided on the underside 3 thereof with a mounting recess 4, for mounting on a mounting rail 6 of conventional "top hat" section, and of the kind conventionally referred to as "din rail", the rail comprising a base 7, spaced, parallel flanges 8 extending from the base, and parallel outwardly extending flanges 9a and 9b which together provides a support surface which may be engaged by an underside of the recess 4.

In use, a plurality of circuit breakers are mounted on the mounting rail 6 with the side faces thereof in generally abutting relationship, with a primary plane of each circuit breaker, extending parallel to the flat sides thereof, extending at right angles to the length of the mounting rail.

The housing is provided on a side edge face 10 thereof with an aperture 11, which together with a connecting screw 12, provides means by which the circuit breaker may be secured to a conventional bus-bar, the bus-bar in use extending into the aperture 11 and being held in position by the screw 12. However in accordance with this invention the circuit breaker is provided with a contact assembly 16, comprising a generally L-shaped contact member 18 over the majority of the length of which is provided an insulating sheath or sleeve 20, leaving a residual, uninsulated terminal portion 22 and a contact portion 24, constituting the shorter limb of the assembly 16.

The contact member extends downwardly from the circuit breaker in a direction extending at right angles to the plane of engagement between the recess 4 of the circuit breaker and the flanges 9 of the mounting rail, with the terminal portion, preferably in the form of a flat blade, projecting beyond said plane of engagement.

The circuit breaker which is the preferred embodiment of this invention is for use with a supply assembly 28 comprising an elongate housing 30 within which a elongate bus-bar 32 is located, the bus-bar being provided at spaced intervals with spring clips 34, each spring clip being provided at an upper end portion thereof with an outwardly-flared entrant portion 35. The bus-bar is located within the housing, which comprises a cover 36, provided at spaced intervals, corresponding to the spacing between the spring clips 34, with slots or apertures 38.

The bus-bar 32 is preferably provided with a flat contact face 33, extending in the longitudinal direction parallel to the length of the mounting rail 6, and at right angles to the primary planes of the circuit breakers when mounted thereon, to be engaged by the flat face of the terminal portion 22 of each contact member 18.

In the practice of the present invention, the contact assembly 16 is secured to the body of the circuit breaker 2, the contact portion 24 being located in the aperture 11 and being secured therein by means of the screw 12, with the terminal portion 22 projecting in a direction generally at right angles to the underside of the aperture 4, and beyond the plane of said underside. The circuit breaker is moved towards the mounting rail 6, with said underside 5 engaging the surfaces 8 provided by the out-turned flanges and the terminal portion 18 passes through one of the apertures 38, engages the opening portion 35 of the spring clip 34 as it moves into contact with the bus-bar 32, the spring clip thereafter retaining the terminal portion 18 in face-to-face contact with the bus-bar.

By this means the circuit breaker may be removed from the mounting rail and supply assembly 30 by simple linear movement in the direction of the arrow A, minimising disruption of the bus-bar and other components which may be mounted on the bus-bar.

However if greater stability is required, a projection may be provided on the right hand side of the housing, as shown in dotted lines and indicated by the numeral 40 in Figure 2, which is engageable beneath the right hand flange 8, to provide greater stability. In such circumstances the circuit breaker may be removed from the mounting rail and bus-bar assembly initially by rotational motion in a clockwise direction, [as indicated by the arrow C] until the terminal portion 22 passes from the aperture 38 of the housing, subsequent to which translational movement in the general direction D may be effected to complete removal of the circuit breaker from the din-rail.

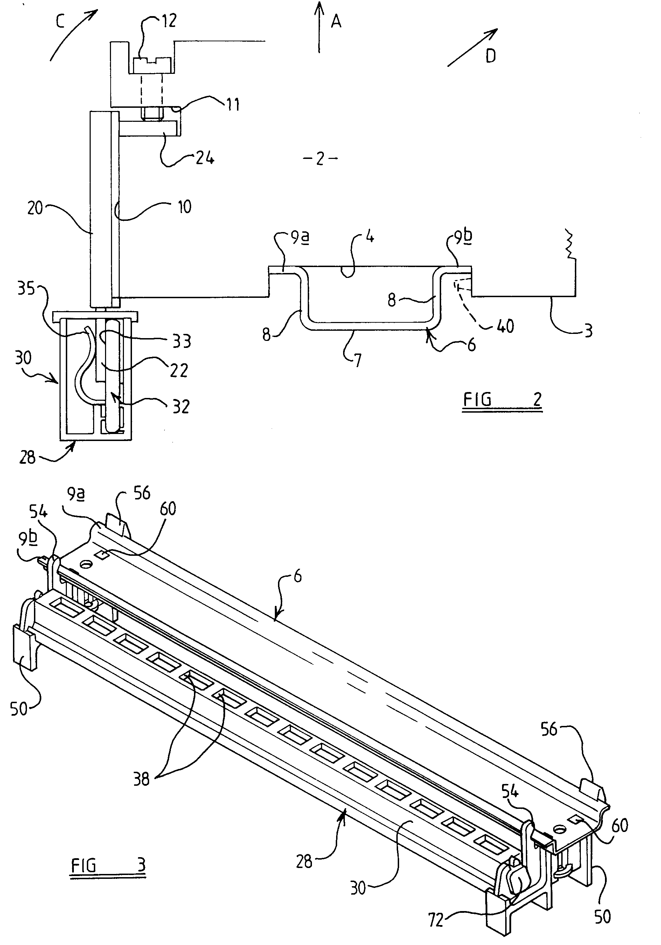

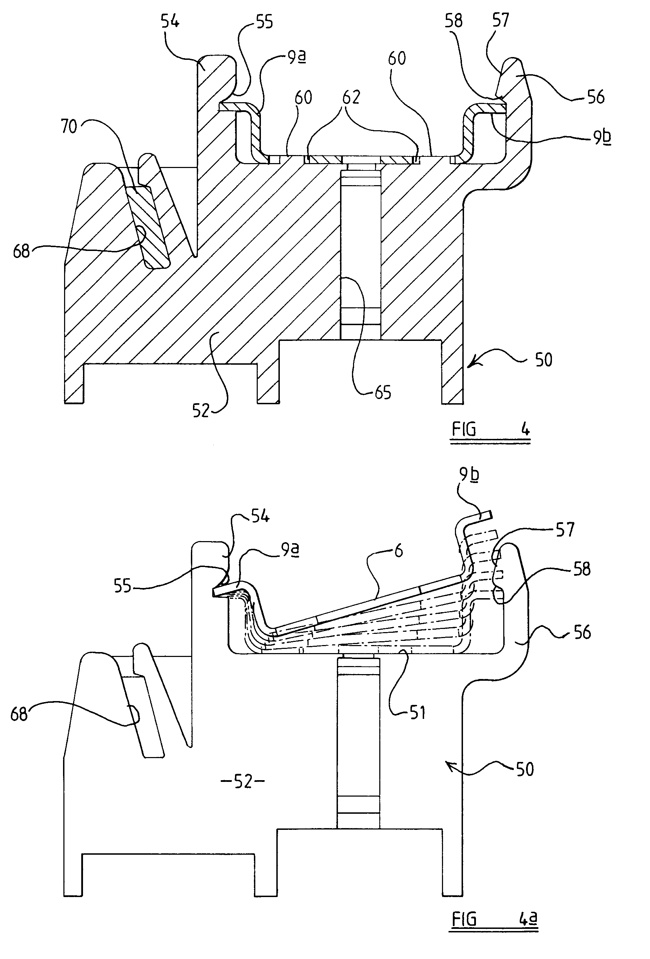

The supporting assembly, shown in detail in Figures 3 and 4, comprising two end housings 50, each comprising a body 52, and parallel arms 54 and 56 extending upwardly therefrom. The arm 54 is provided with a notch 55, whilst the arm 56 is provided with a cam face 57, extending to a re-entrant section 58.

One flange 9a of the mounting rail 6 may be engaged in the notch 55, and the opposite flange 9b pressed against the arm 56, engaging the cam face 57 and causing the arm 56 to flex outwardly, allowing the flange 9 to pass beneath the re-entrant face 58, with the base 7 of the flange resting against a flat upper surface 15 of the body 52.

As shown in Figure 3, extending upwardly from said flat surface of the body are projections 60, conveniently of rectangular cross-section, adapted to locate in complementary apertures 62 in the base 7 of the mounting rail.

Additionally the body 52 is provided with means, conveniently in the form of an aperture 65, to enable a securing element such as a screw to be passed through a hole 66 in the mounting rail for further securement, such as to a mounting surface.

In this manner the mounting rail 6 may readily be secured in a desired position, for the reception of circuit breakers and ancillary equipment.

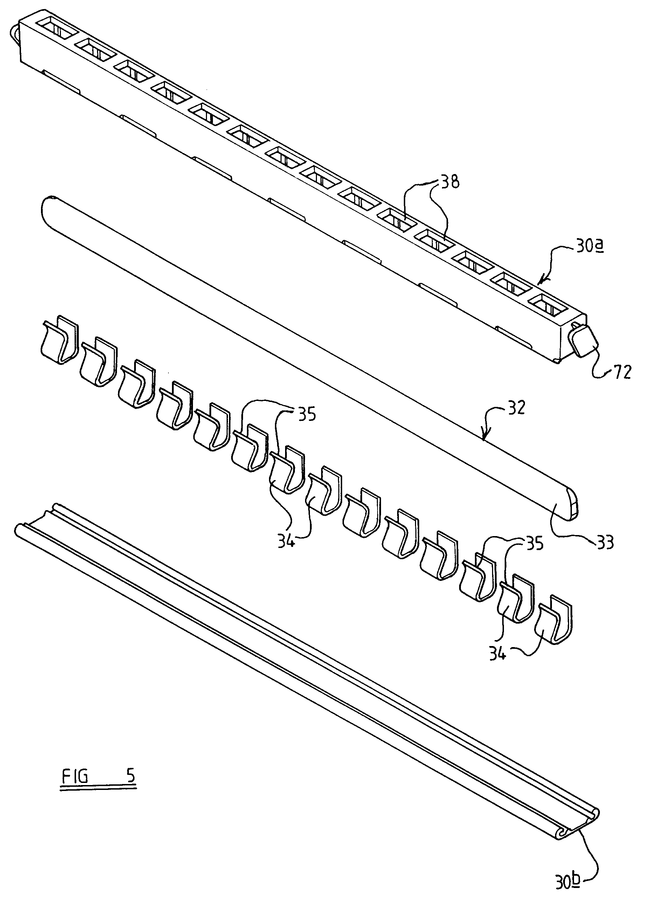

The supporting assembly also provides a support for the supply assembly 28, said supply assembly being shown in exploded form in Figure 5 and comprising an elongate housing 30 comprising an up housing part 30a, and a lower housing part 30b adapted to be snap-fitted together, an elongate supply member in the form of a bus-bar 32 located in the housing, and a plurality of spring clips 44 of generally U-shape embracing the bus-bar. The bus-bar is provided with generally parallel side faces, and each spring clip 34 is provided with an outwardly-flared terminal portion 35 for the reception of a contact element, as will be described hereinafter.

Each housing is provided with a slot 68, within which a location member 70 of an end cap 72 of the housing 30 may be engaged, firmly to secure the supply assembly to the end housing 50.

In this manner a sub-assembly comprising a mounting rail 6 and supply member 32 may be presented ready for installation, which may be accomplished simply by securing the sub-assembly by the use of screws to a supporting surface, ready for the reception of circuit breakers and ancillary equipment, including equipment to supply power to the bus-bar.

The housing 30 of the supply assembly is provided with upwardly-facing apertures 38 of a spacing equal to the width of a conventional circuit breaker, in turn being equal to the spacing of the spring clips 34 on the bus-bar 32.

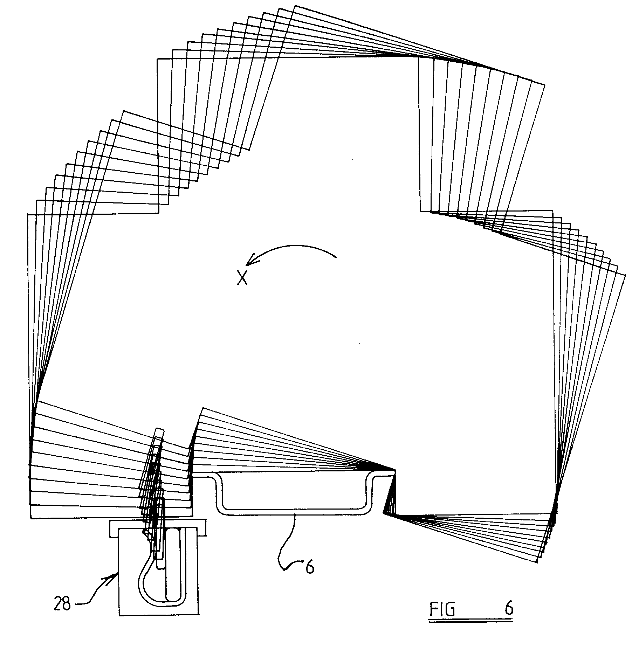

In the use of the sub-assembly, the fixed projection 40 of a circuit breaker is engaged with the flange 9b of the mounting rail, and the circuit breaker is rotated in the direction of the arrow (Figure 6).

As this occurs, the contact portion 22 passes through one of the apertures 38, and engages the outwardly-flared margin 35 of an associated spring clip 34, the contact portion passing into engagement with the bus-bar 32 and being held there against by said spring clip, with the generally flat faces of the contact portion and bus-bar engaging to provide good electrical contact.

On the removal of the circuit breaker from the assembly the circuit breaker is rotated in a direction opposite to the direction, withdrawing the contact portion 22 from the supply assembly, and this may be accomplished with no danger of inadvertently touching electrically live parts of the system.

It will be appreciated that whilst the invention has been described above in relation to the mounting of circuit breakers on mounting rails into electrical contact with a bus-bar, in general it will be desirable to use the same construction in relation to the mounting of other items of electrical equipment including main switches, transformers, RCDs, etc. Thus, where these need to be connected to the bus-bar, they will be provided with contact members similar to the contact members 22 of the circuit breakers above described, enabling them to be mounted on the mounting rail 6, and brought into contact with the bus-bar 32 as hereinbefore described.

Moreover, by virtue of the supply assembly being located to one side, and below the mounting rail 6 (as shown in Figure 2) other electrical components, which may include time switches, time clocks, transformers and the like, but which do not need to be connected to the bus-bar, may be mounted on the mounting rail 6 in a conventional manner, without any interference from the supply assembly. Such ancillary equipment may conveniently enter into engagement with the upper surface of the housing 30a, as would be the case if a conventional circuit breaker, not having a downwardly-extending contact member 22, were mounted on the mounting rail.

The features disclosed in the foregoing description, or the following claims, or the accompanying drawings, expressed in their specific forms or in the terms or means for performing the desired function, or a method or process for attaining the disclosed result, may, separately or in any combination of such features, be utilised for realising the invention in diverse forms thereof.

## Claims

1. In combination, a supply assembly (28) for the use in the supply of electricity to a plurality of circuit breakers, a circuit breaker (1) for use with the supply assembly, and a mounting means (6) upon which the circuit breaker may be mounted, the supply assembly comprising (a) an elongate housing (30), (b) an elongate supply member (32) located in the housing, and (c) a plurality of slots (38) in the housing, the circuit breaker comprising a flat, generally parallel sided body (2) provided on an underside (3) thereof with a mounting recess (4) co-operable with the mounting means (6), and a contact member (16) extending adjacent to an edge face (10) of the circuit breaker and projecting beyond the plane of the underside, whereby in consequence of the mounting of the circuit breaker (1) onto the mounting means(6), part of the contact member (16) passes through one of the slots (38) in the housing and into conductive engagement with the supply member (32).

2. The combination according to Claim 1 comprising spring means (34) to urge the contact member into engagement with the supply member.

3. The combination according to one of Claims 1 and 2 characterised in that the mounting means comprises outwardly facing flanges (8) of inverted L-shape in cross-section, over which the mounting recess (4) in the underside (3) of the circuit breaker may be located.

4. The combination according to Claim 3 characterised in that mounting formations on the circuit breaker comprise one or more formations (40) on the underside to engage with one or both said mounting flanges.

5. The combination according to Claim 4 characterised in that one of said formations (40) is retractable.

6. The combination according to any one of the preceding claims characterised in that the contact member (18) is L-shaped, and is separably mounted on the circuit breaker, the shorter limb (24) of which provides a contact portion which may be located in an aperture (11) of the circuit breaker and secured therein by screw means (12).

7. The combination according to Claim 6 characterised in that the screw means (12) is that by which the circuit breaker may be connected to a conventional bus-bar.

8. The combination according to one of Claims 6 and 7 comprising insulating means (20) to insulate a majority of the length of the contact member (18), leaving a residual, terminal portion (22) of the contact member protruding uninsulated, beyond the underside of the circuit breaker.

9. A circuit breaker comprising a conventional, flat, generally parallel-sided body (2) provided on an underside (3) thereof with a mounting recess (4) co-operable with a conventional mounting means, and which is provided in a side edge face (10) thereof with an edge face recess (11) capable of receiving part of a conventional bus-bar, and screw means (12) capable of clamping the circuit breaker to such a conventional bus-bar,
characterised in that the circuit breaker is provided with a contact member (16) comprising
(i) a contact portion (24) which is adapted to be located in said edge face recess, and which may be secured therein by the screw means;
(ii) a central portion extending adjacent to the side edge face (10) of the body;
(iii) a terminal portion (22) which projects beyond the underside of the body; and
(iv) insulating means (20) for said central portion.

10. A circuit breaker according to claim 9, suitable for use as part of the combination of claim 1.

11. The invention according to any one of the preceding claims comprising a supporting assembly (50) for supporting the mounting means (6) in a fixed relationship relative to the supply assembly (28).

12. A contact member (16) for use with a circuit breaker (1) of the type having a conventional, flat, generally parallel-sided body (2) which is provided in a side edge face (10) thereof with an edge face recess (11) capable of receiving part of a conventional bus-bar and clamping said bus-bar with screw means (12), the contact member (16) comprising:
(i) a contact part (24) which is adapted to be located in said edge face recess (11), and which may be secured therein by the screw means (12);
(ii) a central portion, which when said contact portion (24) is located in said edge face recess (11), extends adjacent to the side edge face (10) of the body;
(iii) a terminal portion (22) which when said contact portion (24) is located in said edge face recess (11), projects beyond the plane of the underside of the body, and
(iv) insulating means (20) for said central portion.
